# EUROPEAN PATENT APPLICATION

(11) **EP 2 589 540 A1**
(43) Date of publication of application: **08.05.2013**
(21) Application number: 11800213.8
(22) Date of filing: 29.06.2011
(51) Int. Cl.: B65B 11/04, B29C 55/18, B32B 3/14

(54) **WRAPPING MACHINE**

(30) Priority: 16.03.2011 ES 201130367; 29.06.2010 ES 201030685 U
(71) Applicant: Control D'Embalatges S.L., 43560 La Senia - Tarragona (ES)
(72) Inventor: CANALS GUIMERA, David, E-43560 La Senia - Tarragona (ES)
(74) Representative: Gallego Jiménez, José Fernando
(86) International application number: PCT/ES2011/000215
(87) International publication number: WO 2012/001185

(57) **Abstract**

The invention relates to a wrapping machine comprising: a structure (1) including a film dispenser (2) which can rotate in relation to the pallet to be wrapped and which can move vertically in relation to the structure (1), said dispenser including a reel holder (3) for the positioning of a reel of continuous plastic film (4), a set of drawing rollers (51, 52), and outfeed rollers (6); and cutting rollers for defining holes (41) in the continuous film (4) and transforming said continuous film (4) into a macroperforated film (42) prior to the application thereof to the load to be wrapped. The set of cutting rollers is formed by a roller (71) bearing radial cutting blades (72) disposed in parallel planes and by an opposing counter-roller (73), between which rollers the continuous plastic film (4) passes.

## Description

### Object of the invention.

The present invention relates to a wrapping machine of the type used for the placement of a plastic film around loads of goods, in order to compact them and hold them together.

### Application field of the invention.

This invention is applicable to the goods packaging industry for their transportation, and more specifically to the sector of machines for packaging of goods on pallets, by wrapping.

### Background of the invention.

At present, it is very common to use plastic film for wrapping pallets of goods by using wrapping machines.

These wrapping machines generally comprise a structure provided with a dispenser of continuous film around the palletized goods to be wrapped. Depending on the type of wrapping machine, either the rotation occurs of the dispenser around the pallet to wrap, or the rotation occurs of the pallet around itself, with the dispenser remaining at a particular point on the periphery.

In any case the said dispenser is vertically movable on the structure in order to be able to apply the plastic film around the pallet and over the entire height thereof.

The dispenser generally comprises: - a reel holder for the positioning of the film to be dispensed, - a set of plastic film drawing rollers and - at least one film outfeed roller. In some cases these wrapping machines further comprise automatic cutting film means and cut film holding clamps.

Therefore these wrapping machines are equipped with means for supplying the plastic film from the reel placed on the reel holder.

Currently there are reels of different types of plastic film on the market, which are applicable to wrapping machines, noteworthy the following types of plastic film:
- Continuous film. It is the most economical and easy to install, but this type of film avoids the breathability and ventilation of the wrapped goods; it also brings up the issues of water condensation inside with consequent dampening of the wrapped goods. Therefore, its use is limited to the wrapping of goods that are unaffected by the drawbacks mentioned regarding breathability and moisture.
- Macroperforated plastic film. It consists of a plastic film having a series of holes, forming parallel rows along the film, alternating with longitudinal reinforcements that improve the mechanical properties of the film. The macroperforated film holes avoids the problems of breathability, ventilation and condensation of the continuous film so that the macroperforated film is especially suitable for wrapping boxes of fruit, vegetables and natural products in general.

A major problem of the macroperforated plastic film reels is that they are irregular due to the uneven overlapping of holes and reinforcements, whereby dispensing is complex and prone to producing blockages and interruptions in the operation of the wrapping machine. However a particularly important problem with the macroperforated film reels is their high cost compared to the continuous film reels.

### Description of the invention.

The wrapping machine object of this invention presents some technical features intended to facilitate the wrapping work with a macroperforated film by preparing the film using the wrapping machine itself starting from conventional continuous film reels, thus reducing wrapping costs and improving operational reliability.

The wrapping machine of the invention is of the type comprising a structure with a film dispenser, which can rotate in relation to the pallet to be wrapped and which can move vertically in relation to the structure, said dispenser comprising: a reel holder for the positioning of a reel of continuous plastic film, a set of drawing rollers to stretch the film to be provided and at least one film outfeed roller.

According to the invention, the wrapping machine comprises: cutting rollers for defining holes in the continuous film from the reel and transforming said continuous film into a macroperforated film prior to the application thereof to the load to be wrapped. Said set of cutting rollers is configured by a roller fitted with radial cutting blades arranged in parallel planes and by an opposing counter-roller, between which rollers the continuous plastic film passes.

The wrapping machine further comprises an additional reel holder bearing at least one film reel for supplying reinforcing film strips, and means for the lateral concentration of each of the reinforcing film strips and the shaping of respective cords. These cords are intended to be applied in parallel and in longitudinal direction on one side of the continuous film so that said cords are positioned between the holes of the macroperforated film.

The preparation of the macroperforated film at the wrapping time improves the quality of said macroperforated film since it does not need to be wound for being stored and transported and then unwound for its use.

In turn, the reinforced film or sheet has an improved mechanical performance because the film is continuous, and the cords are stretched; thereby less material is required to wrap an object or goods.

In one embodiment, the additional reel holder presents the reinforcing film strips in a plurality of independent reels arranged in parallel. Thus the reinforcing film strips are simultaneously supplied already pre-cut.

In one embodiment, the provision of reinforcing strips comprises a continuous film reel in the additional reel holder, and cutting means, arranged between the additional reel holder and the lateral concentration means, for the continuous film cutting from said reel in reinforcing film strips before passing by the lateral concentration means. This configuration allows for the reduction of stocking or storage of film reels, since continuous film reels can also serve to make reinforcing film strips at the same time as the elaboration of the macroperforated film.

To improve the adhesion of cords of reinforcing film to the plastic film, in one embodiment it is provided that said plastic film has adhesive on the side to be attached to said cords, for example.

In one embodiment, lateral concentration means are conformed by a comb which produces a concentration of reinforcing film strips as they approach around strangulations defined in the comb, causing the formation of the reinforcing film cords.

In one embodiment of the invention, the blades on the roller corresponding to the set of cutting rollers are heated blades and the counter-roller presents a heat resistant coating, so that the holes on the macroperforated film are made quickly by the contact and fusion of the continuous film with these blades, without forming tears.

In one embodiment example, these blades include a nichrome heater wire, and the bearing roller presents a coating of glass fibre reinforced in areas not occupied by the said blades. These blades are heated to a temperature approximately between 50 and 120 degrees Celsius. In turn, the counter-roller outwardly presents a heat resistant coating, which is, for example, a silicone sleeve that ensures the correct cutting of the continuous plastic film as it withstands temperatures of up to 200 degrees Celsius.

In one preferred embodiment, the set of cutting rollers is arranged before the set of drawing rollers, in such a way that the holes on the macroperforated film are performed during this stretching of the macroperforated film, thus adopting an oval shape.

In an alternative embodiment, it is provided that the set of cutting rollers is arranged after the set of drawing rollers.

In one embodiment, aimed at enabling a greater elaboration speed of the macroperforated film, the concentration means are made up of a rotating roller, provided with perimeter throats having a "V"-shaped section, for the passage and concentration of the reinforcing film strips. The perimeter throats of the concentration roller present a v-shaped section, acquiring a spatial form of diabolo or two frusta of a cone opposed by their smaller bases.

Reinforcing film strips pass through said throat more smoothly, without the risk of snags or friction that could damage it, thus improving the supply speed conditions of the reinforcing cords.

In one embodiment, the drawing rollers are provided with a motorization and arranged in consecutive order, for the passage of the continuous film reinforced with cords, by turning the outer surface of the second drawing roller at a speed that is tangentially greater than that of the first drawing roller, causing the stretching of the sheet of continuous film with the reinforcing cords. Thus, an increase in resistance and the attachment of the cords to the continuous film are obtained by elongation. In case the continuous film enters between the drawing rollers with the holes of the macroperforated film cut, these holes become longer with the material, acquiring their longitudinally elongated oval shape. This motorization or relative motion between the two rollers can be achieved with various solutions, such as, for example, a motor driving a gear associated with the two rollers in order to move them at different speeds. In another embodiment, the drawing roller is motorized and the other drawing roller includes a brake or an engine that forces it to rotate at a slower speed.

In a preferred embodiment, the drawing rollers are arranged alternated on both sides of the passage of the continuous film and of the reinforcing cords during their stretching. This ensures better adhesion of cords to the continuous film.

### Description of figures.

In order to complement the description that is being carried out and with the purpose of facilitating the understanding of the characteristics of the invention, the present description is accompanied by a set of drawings wherein, by way of a non-limiting example, the following has been represented:
- Figure 1 shows a plan view of the wrapping machine with the set of cutting cylinders in a previous position to that of the set of drawing rollers.
- Figure 2 shows a plan view of the wrapping machine with the set of cutting cylinders in a subsequent position to that of the set of drawing rollers.
- Figure 3 shows a partial detail in perspective of the conformation of the reinforcements and its union to the continuous film when passing through concentration means, in this case a comb.

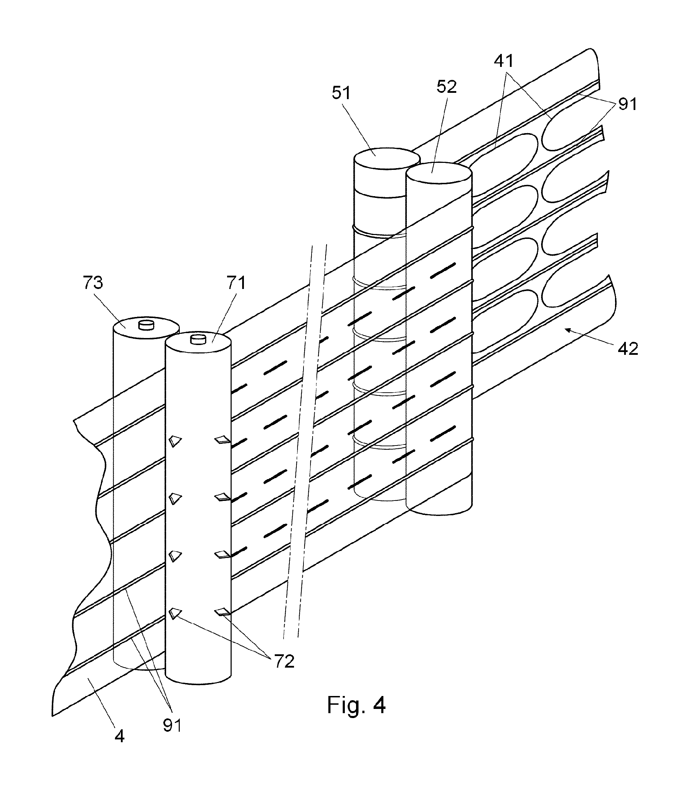

- Figure 4 shows a partial detail in perspective of the conformation of the holes of the macroperforated film and the passage of the continuous film by the drawing rollers to finally obtain the macroperforated film.
- Figure 5 shows an elevation view of the longitudinal sequence of the movement of the continuous film and cords, showing the way the reinforcing film strips come from independent reels on the additional reel holder.
- Figure 6 shows an elevation view of the longitudinal sequence of an alternative embodiment of the movement of the continuous film and cords, showing the way the reinforcing film strips are obtained from a reel of continuous film passing through means for the cutting and separation of these strips of reinforcing film in situ.

### Preferred embodiment of the invention.

As can be seen in the referenced figures, the wrapping machine object of this invention comprises, in a first embodiment, a turntable (14) for the placement of the pallet (P) to be wrapped, and a lateral structure (1) with a column (15) on which there is a dispenser (2) for dispensing a wrapping macroperforated film (42), said dispenser (2) being able to move upwards and downwards on that column (15) of the structure (1). Attached to the structure (1) is a station (16) of control and electrical instrumentation that manages the entire wrapping machine.

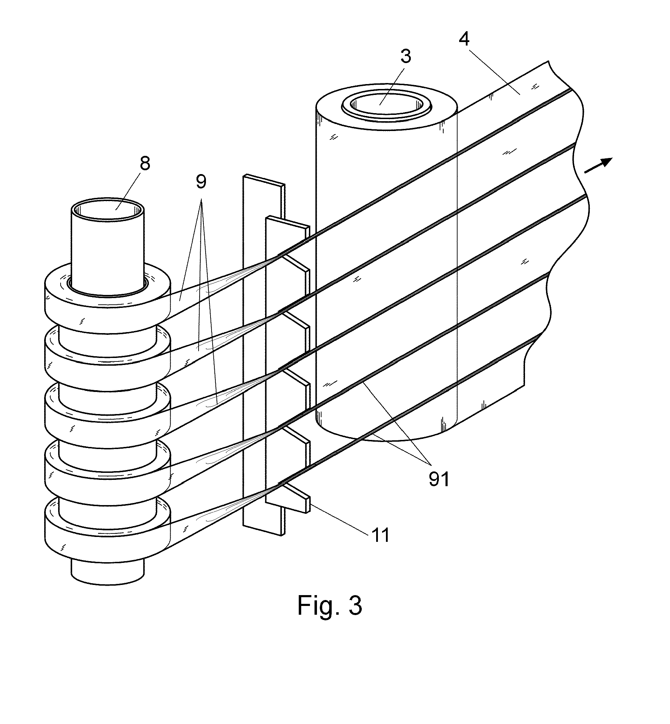

The dispenser (2) comprises a reel holder (3) of a continuous film (4) of plastic, next to which is an additional reel holder (8) of reinforcing film (9), which in Figure 3 is wound in several independent reels (92) arranged parallel on said additional reel holder (8).

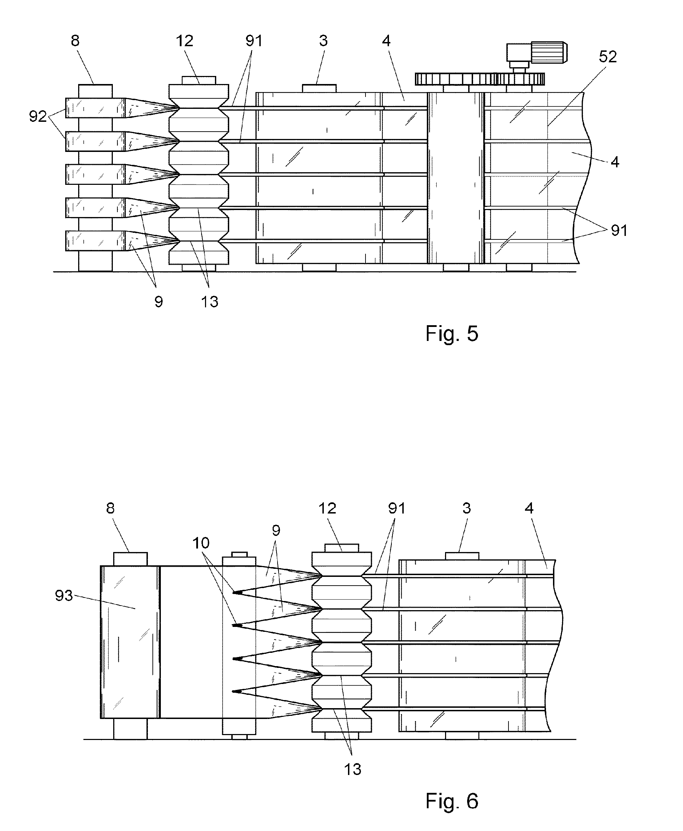

In an alternative embodiment, shown in Figure 6, the additional reel holder (8) comprises a reel (93) of continuous film, which faces cutting means (10) for forming the reinforcing film strips (9) before passing through the concentrating means forming the cords (91).

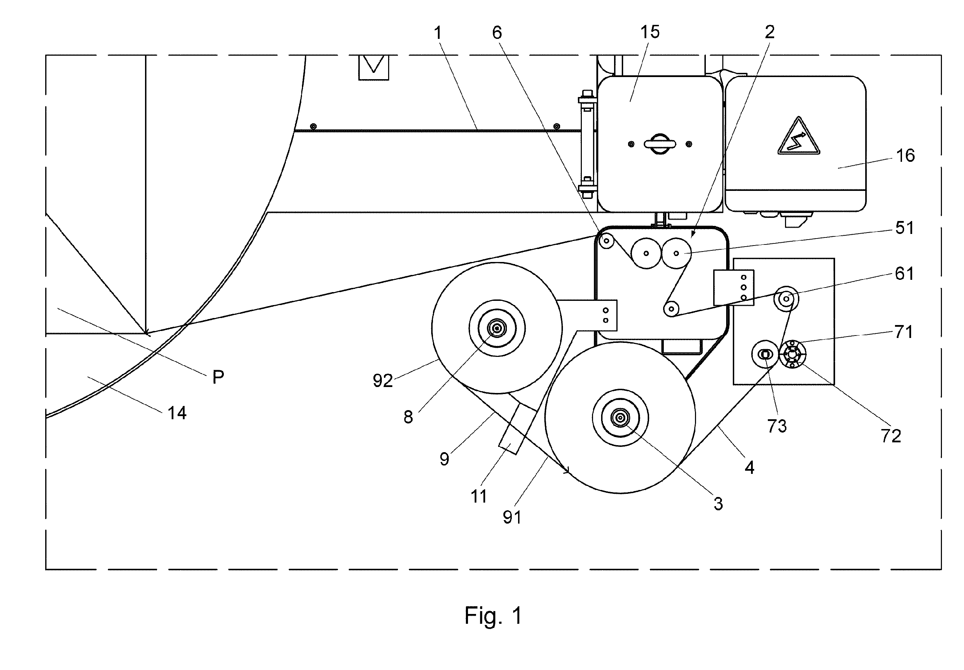

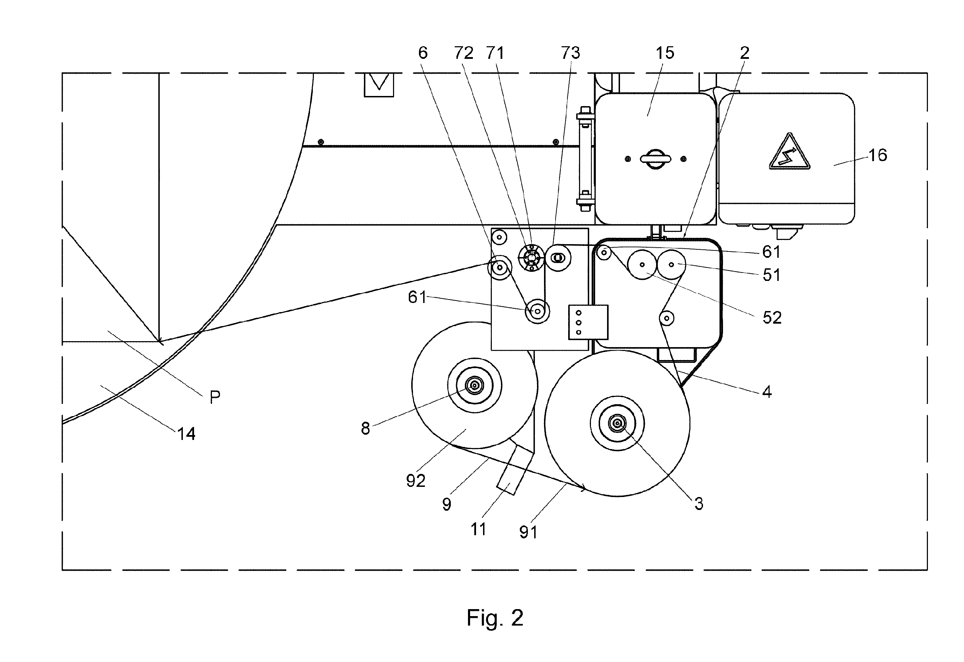

In one embodiment shown in Figures 1 to 3, between both reel holders (3, 8) there is a comb (11), in vertical position, for the concentration of the reinforcing film strips (9) into strands (91), for fixing them to a side of the continuous film (4) supplied by the main reel holder (3).

This comb (11) is, in this case, made of nylon, with wider entrances towards a strangulation for cord formation (91). The dispenser (2) has a set of cutting rollers into which the continuous film (4) with the reinforcing cords (91) enters.

This set of cutting rollers comprises a roller (71) bearing longitudinal heating cutting blades (72) and an opposing counter-roller (73), between which the continuous plastic film (4) passes. Both rollers (71 and 73) comprise a mechanism that makes them rotate in the advancing direction of the continuous plastic film (4) synchronously.

These blades (72) are arranged longitudinally for the formation of holes (41) in the continuous film (4), separated by spaces that correspond to passage areas of the cords (91) of the reinforcing film strips (9), which are not cut.

Then the dispenser (2) has a set of drawing rollers (51 and 52), which rotate at different speeds to produce a stretching of the macroperforated film (42) for its application onto the pallet (P) and the widening of the holes (41) of the macroperforated film until their oval shape.

The dispenser (2) has an outfeed roller (6) for the macroperforated film (42) during its handling.

Figure 5 shows an embodiment of the wrapping machine, which firstly presents, in the course of the continuous film (4), the set of drawing rollers (51, 52) and subsequently the set of cutting rollers.

In one embodiment, the positioning means of the cords (91) on the continuous film (4) comprise the additional reel holder (8) and a plurality of independent reels (92) of reinforcing film strips (9), arranged parallel to plunge into the concentration means, which in this case are configured by a concentrating rotating roller (12), wherein the reinforcing film strips (9) are converted into cords (91). This concentrating rotating roller (12) rotates freely and has a perimeter throat (13) with a "V"-shaped section to concentrate the respective reinforcing film strips (9) into cords (91). Following the concentrating rotating roller (12) is the reel holder (3) bearing the continuous film reel (4), and the cords (91) are applied to the outer surface of this reel, accompanying the continuous film (4) in its unwinding toward a pair of drawing rollers (51, 52).

This pair of drawing rollers (51, 52) comprises a motorization that enables the tangential velocity of the surface of the second roller (52) to be higher than the tangential speed of the first roller (51) to produce the stretching of the continuous film (4) and the cords (91) applied on its surface, thus producing its adhesion, improving their strength and optimizing its use by means of its general elongation.

At the entrance and at the exit of the pair of drawing rollers (51, 52) are intermediate rollers (61) for diverting the macroperforated film (42).

Once the nature of the invention as well as an example of preferred embodiment have been sufficiently described, it is stated for all pertinent purposes that the materials, form, size and arrangement of the elements described are susceptible to changes, provided these do not involve an alteration of the essential characteristics of the invention that are claimed subsequently.

## Claims

1. Wrapping machine, of the type comprising a structure (1) having a film dispenser (2) which can rotate in relation to the pallet to be wrapped and which can move vertically in relation to the structure (1); said dispenser comprising a reel holder (3) for the positioning of a reel of continuous plastic film (4), a set of drawing rollers (51, 52) and at least one outfeed roller (6) of continuous film (4), **characterized in that** it comprises cutting rollers for defining holes (41) in the continuous film (4) coming from the reel and transforming said continuous film (4) into a macroperforated film (42) prior to the application thereof to the load to be wrapped, the set of cutting roller being formed by a roller (71) bearing radial cutting blades (72), arranged in parallel planes, and by an opposing counter-roller (73), between which the continuous plastic film (4) passes.

2. Wrapping machine according to claim 1, **characterized in that** it comprises an additional reel holder (8) carrying at least one film reel (92, 93) for supplying reinforcing film strips (9), and means for the lateral concentration of each of the reinforcing film strips (9) and forming respective cords (91) intended to be applied in parallel and in longitudinal direction on one side of the continuous film (4) so that said cords (91) are positioned between the holes (41) of the macroperforated film (42).

3. Wrapping machine, according to claim 2, **characterized in that** it comprises a reel (93) of continuous film on the additional reel holder (8), and cutting means (10) arranged between the additional reel holder (8) and the lateral concentrating means (11, 12) for cutting the continuous film of the reel (93) in reinforcing film strips (9) before it passes through the lateral concentration means.

4. Wrapping machine according to any of claims 2 and 3, **characterized in that** lateral concentration means are formed by a comb (11).

5. Wrapping machine according to any of the preceding claims, **characterized in that** the blades (72) are heated blades and the counter-roller (73) has a heat resistant coating (75).

6. Wrapping machine according to any of the preceding claims, **characterized in that** the set of cutting rollers is arranged before the set of drawing rollers (51, 52).

7. Wrapping machine according to any of claims 1 to 5, **characterized in that** the set of cutting rollers is arranged after the set of drawing rollers (51, 52).

8. Wrapping machine according to any of claims 2 and 3, **characterized in that** the concentration means are made up of a rotating roller (12), equipped with a perimeter throat (13) with a "V"-shaped section for the passage and concentration of the reinforcing film strips (9).

9. Wrapping machine according to any of the preceding claims, **characterized in that** the drawing rollers (51, 52) are provided with motorization and arranged in consecutive order for the passage of the continuous film (4) reinforced with the cords (91), the outer surface of the second drawing roller (52) rotating at a higher tangential speed than the first drawing roller (51), thus causing the stretching of the continuous sheet of film (4), with the reinforcing cords (91) and obtaining an increased resistance and their attachment.

10. Wrapping machine according to claim 7, **characterized in that** the drawing rollers (51, 52) are arranged alternately on both sides of the passage of the continuous film (4) and the reinforcing cords (91) during their stretching.
